# EUROPEAN PATENT APPLICATION

(11) **EP 4 646 000 A1**
(43) Date of publication of application: **05.11.2025**
(21) Application number: 23912889.5
(22) Date of filing: 26.12.2023
(51) Int. Cl.: H04W 72/566, H04W 72/543, H04W 74/00, H04W 74/08, H04W 84/12, H04L 27/26

(54) **METHOD AND DEVICE FOR TRANSMISSION OR RECEPTION BASED ON FLEXIBLE USER PRIORITY-TO-ACCESS CATEGORY MAPPING IN WIRELESS LAN SYSTEM**

(30) Priority: 29.12.2022 KR 20220189409; 13.01.2023 KR 20230005580; 27.03.2023 KR 20230040000
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR)
(74) Representative: Frenkel, Matthias Alexander
(86) International application number: PCT/KR2023/021596
(87) International publication number: WO 2024/144214

(57) **Abstract**

Disclosed are a method and a device for transmission or reception based on flexible user priority (UP)-to-access category (AC) mapping in a wireless LAN system. A method performed by a station (STA) in a wireless LAN system according to an embodiment of the present disclosure may comprise the steps of: transmitting, to an access point (AP), a request including information associated with first user priority-to-access category (UP-to-AC) mapping; receiving, from the AP, a response including one or more of information associated with second UP-to-AC mapping and whether the information associated with the first UP-to-AC mapping is accepted; and performing frame exchange with the AP on the basis of the information associated with the first UP-to-AC mapping or the information associated with the second UP-to-AC mapping.

## Description

### [TECHNICAL FIELD]

The present disclosure relates to a transmission or reception method and device based on flexible user priority(UP)-to-access category(AC) mapping in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a method and a device for supporting flexible user priority-to-access category (UP-to-AC) mapping in a WLAN system.

An additional technical problem of the present disclosure is to provide a method and a device for performing rapid transmission or reception of low latency (LL) traffic based on flexible UP-to-AC in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a WLAN system according to an aspect of the present disclosure may include transmitting, to an access point (AP), a request including information related to first user priority-to-access category (UP-to-AC) mapping; receiving, from the AP, a response including at least one of information related to second UP-to-AC mapping or whether information related to the first UP-to-AC mapping is accepted; and performing frame exchange with the AP based on the information related to the first UP-to-AC mapping or the information related to the second UP-to-AC mapping.

A method performed by an access point (AP) in a WLAN system according to an additional aspect of the present disclosure may include receiving, from a station (STA), a request including information related to first user priority-to-access category (UP-to-AC) mapping; transmitting, to the STA, a response including at least one of information related to second UP-to-AC mapping or whether information related to the first UP-to-AC mapping is accepted; and performing frame exchange with the STA based on the information related to the first UP-to-AC mapping or the information related to the second UP-to-AC mapping.

### [Technical Effects]

According to the present disclosure, a method and a device for supporting flexible user priority-to-access category (UP-to-AC) mapping in a WLAN system may be provided.

According to the present disclosure, a method and a device for performing rapid transmission or reception of low latency (LL) traffic based on flexible UP-to-AC in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing an example of a FUTA-based operation of a STA according to the present disclosure.
FIG. 9 is a diagram for describing an example of a FUTA-based operation of an AP according to the present disclosure.
FIG. 10 and FIG. 11 are a diagram showing examples of information indicating mapping of UP-to-AC according to the present disclosure.
FIG. 12 shows an example of an EDCA parameter set information element format according to the present disclosure.
FIG. 13 and FIG. 14 are a diagram for describing examples of an operation of an AP and a STA for applying FUTA according to the present disclosure.
FIG. 15 is a diagram showing an example of FUTA mapping-based traffic transmission according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

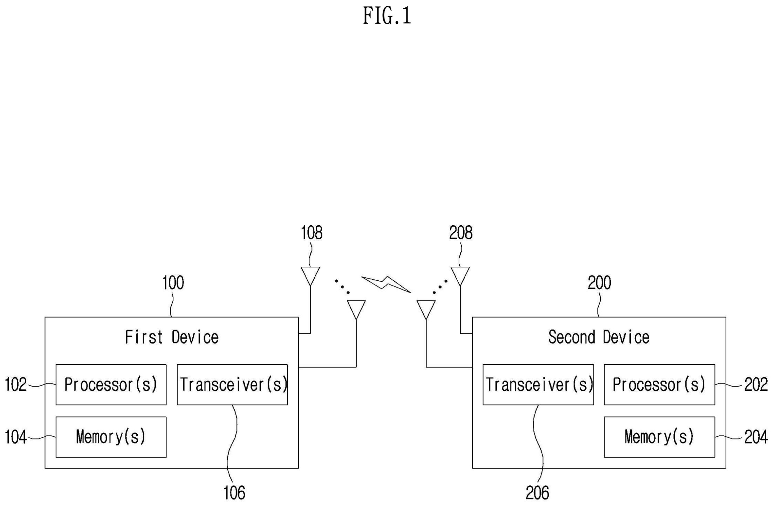

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

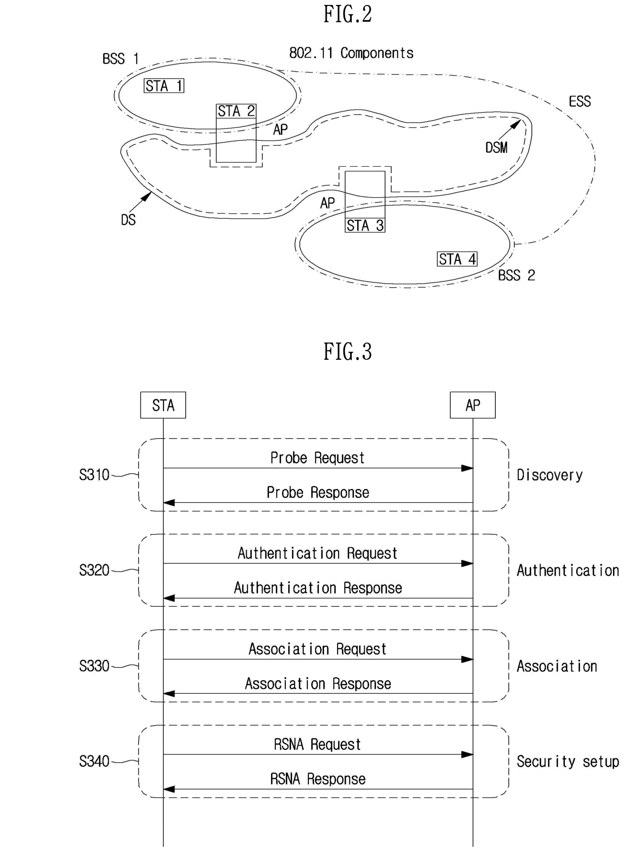

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

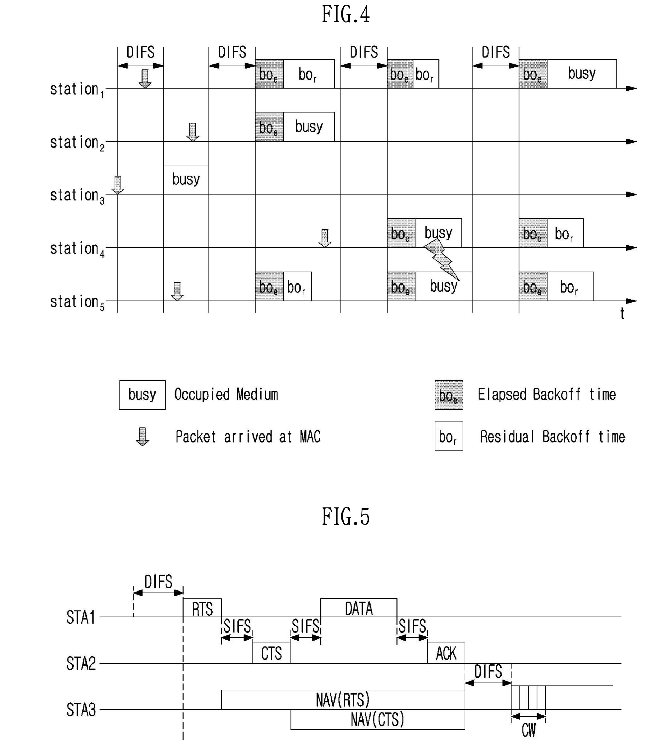

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, **1, 2,** ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

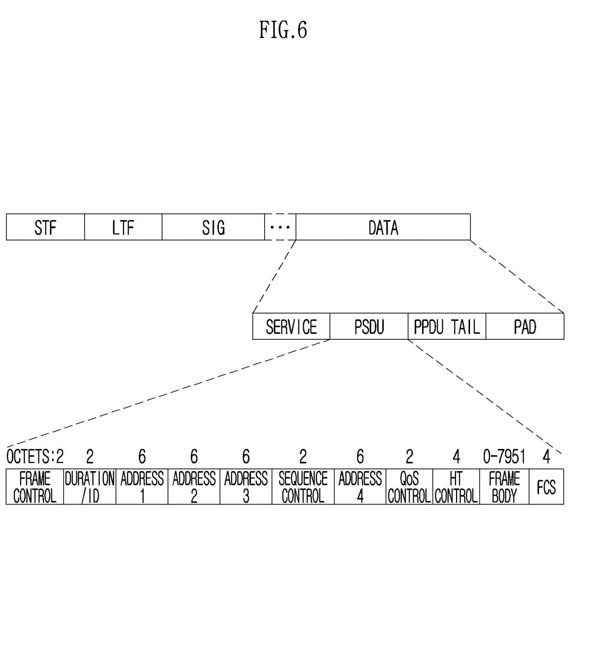

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

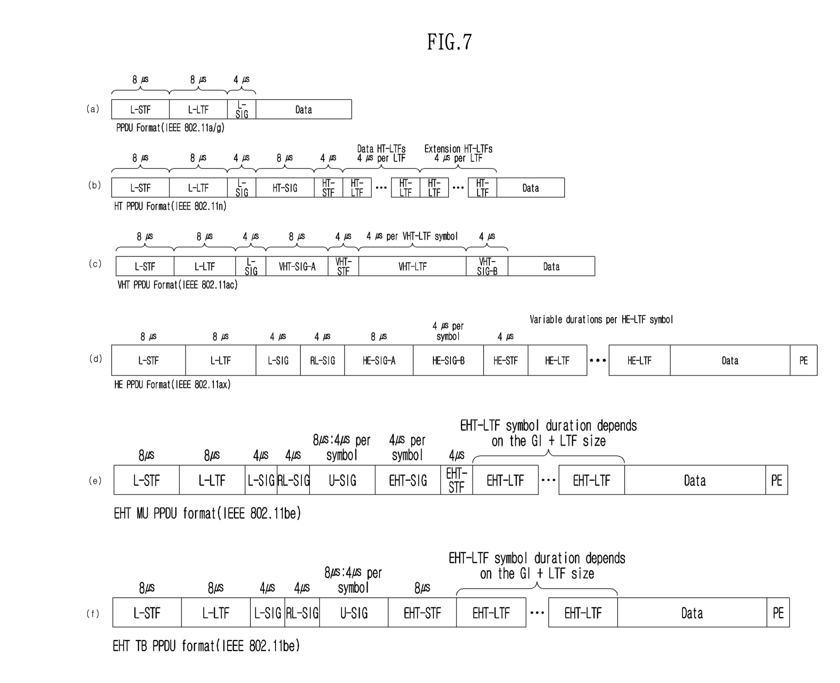

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### UP-to-AC Mapping

An UP (user priority) is a value associated with a MAC SDU (MSDU), and may indicate how a corresponding MSDU is handled. An UP may be allocated to a MSDU by the higher layer of MAC.

An AC (access category) is a label for the common set of EDCA parameters used by a QoS STA contending for a channel in order to transmit MSDU(s) with a predetermined priority.

A traffic identifier (TID) corresponds to arbitrary identifiers that may be used by a higher layer entity to distinguish MSDUs to MAC entities supporting QoS within a MAC data service. For example, there may be 16 possible TIDs. Eight of them may identify traffic categories (TC), and the remaining eight may identify parameterized traffic streams (TS). A TID may be allocated to a MSDU in the higher layer of MAC.

A traffic category (TC) corresponds to a label for MSDUs that have a relatively distinct UP compared to other MSDUs provided for delivery through the same link from the perspective of a higher layer entity. A TC may be meaningful for MAC entities supporting QoS within a MAC data service. These MAC entities may determine an UP for MSDUs belonging to a specific TC by using a priority value provided to corresponding MSDUs at a MAC Service access point (SAP).

A traffic stream (TS) corresponds to a set of MSDUs delivered after QoS parameter values provided for a MAC are applied in a specific traffic specification (TSPEC). A TSPEC corresponds to the QoS characteristic of a data flow to/from a QoS STA.

Table 1 shows the existing defined UP-to-AC mappings.

**[Table1]**

| **Priority** | **UP** | **AC** | **Transmit queue (dot11Alternate-EDCAActivated false or not present)** | **Transmit queue (dot11Alternate EDCAActivated true)** | **Designation** |
|---|---|---|---|---|---|
| Lowest ↓ Highest | 1 | AC_BK | BK | BK | Background |
| | 2 | AC_BK | BK | BK | Background |
| | 0 | AC_BE | BE | BE | Best Effort |
| | 3 | AC_BE | BE | BE | Best Effort |
| | 4 | AC_V1 | VI | A_VI | Video (alternate) |
| | 5 | AC_VI | VI | VI | Video (primary) |
| | 6 | AC_VO | VO | VO | Voice (primary) |
| | 7 | AC_VO | VO | A_VO | Voice (alternate) |

In the example of Table 1, a designation column is exemplary, and the actual usage of each UP may be defined differently. A Background (BK) corresponds to the lowest priority, and a voice (VO) corresponds to the highest priority. The order of BK, BE (best effort), VI(video), and VO may correspond to the ascending order of priority.

As described above, a TID may be provided to MAC together with a MSDU based on a priority parameter from the higher layer of MAC. Here, TID 0 to 7 may be considered as an UP. Each UP may be mapped to a specific AC. In the existing WLAN system, UP-to-AC mapping is defined as a fixed mapping relationship as in Table 1. In addition, the number of UPs mapped per AC is also fixed and defined as 2. In other words, as in Table 1, it is defined that UP 1 and 2 are mapped to AC_BK, UP 0 and 3 are mapped to AC_BE, UP 4 and 5 are mapped to AC_VI, and UP 6 and 7 are mapped to AC_VO.

### Flexible UP-to-AC Mapping (FUTA)

As described above, the existing UP-to-AC mapping is fixed and defined, so it may not support priority adjustment for traffic (or MSDU(s)) of an application requiring low latency (LL) that occurs dynamically. In other words, the existing fixed UP-to-AC mapping may not efficiently support LL traffic. Accordingly, flexible UP-to-AC (FUTA) mapping that dynamically and appropriately modifies UP-to-AC is required.

For example, it may be assumed that LL traffic and general (or non-LL) traffic coexist in one AC. If non-LL traffic is mapped to a queue before LL traffic, the transmission of LL traffic may be delayed because the transmission of other packets is delayed due to head-of-line (HOL) blocking, i.e., the first packet in the same queue. In addition, according to the status of queues mapped to each AC, it may be required to apply AC mapping for LL traffic differently from the existing fixed UP-to-AC mapping so that LL traffic may be transmitted preferentially.

The present disclosure describes various examples of a method for supporting flexible UP-to-AC mapping for specific traffic (e.g., LL traffic). Although the examples of the present disclosure are mainly described by assuming LL traffic, the scope of the present disclosure is not limited thereto, and flexible UP-to-AC mapping may also be applied to other types of traffic or general traffic. In addition, unless specifically restricted in an explanation described below, a STA may include an AP STA or a non-AP STA.

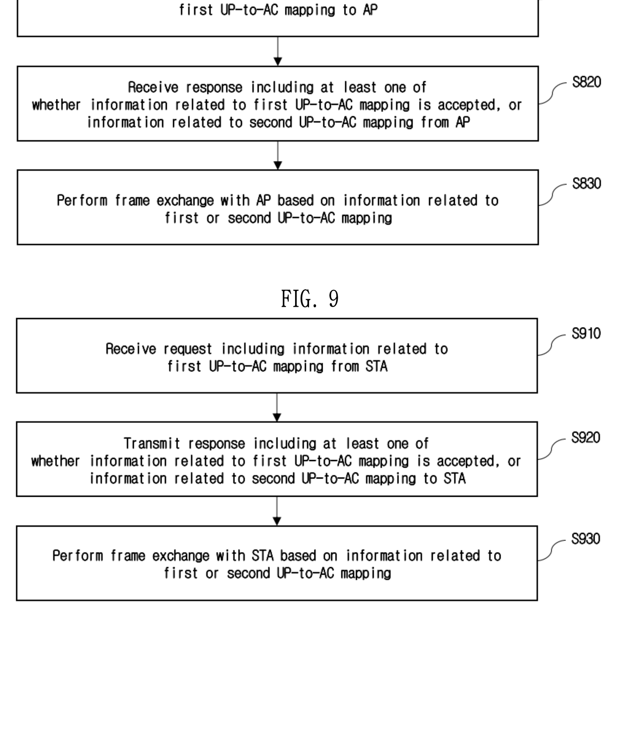

FIG. 8 is a diagram for describing an example of a FUTA-based operation of a STA according to the present disclosure.

In S810, a STA may transmit a request including information related to the first UP-to-AC mapping to an AP.

In S820, a STA may receive from an AP a response including information related to the second UP-to-AC mapping at least one of information related to the second UP-to-AC mapping or whether information related to the first UP-to-AC mapping is accepted.

For example, the first UP-to-AC mapping may include information related to UP-to-AC mapping that a STA intends to apply (or requests confirmation of whether application will be allowed), and the second UP-to-AC mapping may include information related to UP-to-AC mapping that an AP allows.

Information related to the first UP-to-AC mapping and/or information related to the second UP-to-AC mapping may include an AC index for an UP. Alternatively, information related to the first UP-to-AC mapping and/or information related to the second UP-to-AC mapping may include an UP index for an AC. Alternatively, information related to the first UP-to-AC mapping and/or information related to the second UP-to-AC mapping may include an UP bitmap for an AC.

A set of ACs may include at least one of a VO, a VI, a BE, a BK or an additional (or new) AC. In other words, at least one element may be applied as an AC in a set including a VO, a VI, a BE and a BK corresponding to the existing AC, and new AC1, new AC2, new AC3, .... For example, an AC may correspond to one element from a set of a reduced size than the existing four ACs, or may correspond to one element from a set of an extended size exceeding four. A set of ACs may not include new AC1, new AC2, new AC3, ....

A set of UPs may include at least one of the existing eight UPs (e.g., 0-7, but a value thereof is not limited to 0-7), or at least one additional UP. In other words, at least one element may be applied as an UP in a set including 0-7 corresponding to the existing UP, and new UP1, new UP2, new UP3, .... For example, an UP may correspond to one element from a set of a reduced size than the existing eight ACs, or may correspond to one element from a set of an extended size exceeding eight. A set of UPs may not include new UP1, new UP2, new UP3, ....

Information related to the first UP-to-AC mapping and/or information related to the second UP-to-AC mapping may include a presence field. A presence field may indicate which UP-to-AC mapping related subfield exists among the multiple UP-to-AC related subfields. In other words, information related to the first UP-to-AC mapping and/or information related to the second UP-to-AC mapping may include at least one UP-to-AC mapping related subfield indicated by a presence field.

Information related to the first UP-to-AC mapping and/or information related to the second UP-to-AC mapping may include an EDCA parameter. For example, an EDCA parameter may include an EDCA parameter for each of at least one of a VO, a VI, a BE, a BK or an additional (or new) AC. In other words, at least one element may be applied as an EDCA parameter in a set including an EDCA parameter for a VO, an EDCA parameter for a VI, an EDCA parameter for a BE, an EDCA parameter for a BK, an EDCA parameter for new AC1, an EDCA parameter for new AC2, an EDCA parameter for new AC3, ... For example, an EDCA parameter may correspond to one element from a set of a reduced size than an EDCA parameter for the existing four ACs, or may correspond to one element from a set of an extended size exceeding four. A set of EDCA parameters may not include new AC1, new AC2, new AC3, ....

Information related to the first UP-to-AC mapping and/or information related to the second UP-to-AC mapping may include information about an UP-to-AC mapping timer. An UP-to-AC mapping timer may indicate the length of time to which UP-to-AC mapping related to a corresponding timer is applied. In other words, corresponding UP-to-AC mapping may be applied while a timer is running, and corresponding UP-to-AC mapping may not be applied when a timer expires. After a timer expires, for example, default UP-to-AC mapping may be applied, or previously indicated UP-to-AC mapping may be applied.

When UP-to-AC mapping included in information related to the first UP-to-AC mapping and/or information related to the second UP-to-AC mapping is not applied, fixed UP-to-AC mapping may be applied as default.

Although not shown in FIG. 8, before S810, at least one of capability information related to UP-to-AC mapping (i.e., whether flexible UP-to-AC may be applied) or information related to UP-to-AC mapping may be announced by an AP. Information related to UP-to-AC mapping announced by an AP may include information about candidate(s) of UP-to-AC mapping that an AP may support, and in S810, a STA may request an AP for UP-to-AC mapping of all/a part of the candidate(s) as information related to the first UP-to-AC mapping. Alternatively, information related to UP-to-AC mapping announced by an AP may include information about UP-to-AC mapping supported by an AP, and information about announced UP-to-AC mapping may be applied without a STA's request therefor.

In S830, a STA may perform frame exchange with an AP based on information related to the first or second UP-to-AC mapping.

In frame exchange, LL traffic may be mapped to the first queue corresponding to the first AC, may be mapped to the second queue corresponding to the second AC, or may be mapped to both the first queue and the second queue. The first queue and the second queue may exist on the transmitting side of LL traffic (which may be a STA or an AP).

For example, when LL traffic is mapped to the first queue and the second queue, if the transmission of LL traffic included in the first queue is completed, the LL traffic may be deleted from the second queue. For example, when LL traffic is mapped to the first queue and the second queue, if ACK for the transmission of LL traffic included in the first queue is received, LL traffic may be deleted from the second queue. For example, when LL traffic mapped to the second queue is mapped to the first queue (i.e., a queue is changed or traffic is moved to another queue), LL traffic may be deleted from the second queue.

The first queue may be a queue associated with an earlier transmission opportunity (TXOP) than the second queue. For example, the first TXOP corresponding to the first AC or the first queue may precede the second TXOP corresponding to the second AC or the second queue in a time domain. A TXOP on one channel does not overlap, and a next TXOP may be obtained after any one TXOP is terminated.

Additionally or alternatively, the first queue may correspond to a queue where the next traffic (e.g., LL traffic) may be transmitted first compared to the second queue. When there is preceding traffic that is already mapped to any queue, LL traffic may be mapped after preceding traffic in a corresponding queue. In other words, the first queue may correspond to a queue where there is less/no preceding traffic compared to the second queue.

Additionally or alternatively, when obtaining the first TXOP and the second TXOP contends, the first TXOP may correspond to a TXOP that is obtained first (or is more likely to be obtained first based on a backoff parameter, etc.) compared to the second TXOP.

A method described in the example of FIG. 8 may be performed by a first device 100 in FIG. 1. For example, at least one processor 102 of the first device 100 in FIG. 1 may be configured to transmit a request including information related to the first user UP-to-AC mapping to an AP, receive a response including information related to the second UP-to-AC mapping from an AP and perform frame exchange with an AP based on information related to the second UP-to-AC mapping. Furthermore, at least one memory 104 of a first device 100 may store instructions for performing a method described in the example of FIG. 8 or examples described below when executed by at least one processor 102.

FIG. 9 is a diagram for describing an example of a FUTA-based operation of an AP according to the present disclosure.

In S910, an AP may receive a request including information related to the first UP-to-AC mapping from a STA.

In S920, an AP may transmit to a STA a response including at least one of information related to the second UP-to-AC mapping or whether information related to the first UP-to-AC mapping is accepted.

Since the specific details of information related to the first UP-to-AC mapping and/or information related to the second UP-to-AC mapping are the same as described in the example of FIG. 8, an overlapping description is omitted.

In S930, an AP may perform frame exchange with a STA based on information related to the first or second UP-to-AC mapping.

Since the specific details of frame exchange are the same as described in the example of FIG. 8, an overlapping description is omitted.

A method described in the example of FIG. 9 may be performed by a second device 200 in FIG. 1. For example, at least one processor 202 of the second device 200 in FIG. 1 may be configured to transmit a request including information related to the first user UP-to-AC mapping from a STA, transmit a response including information related to the second UP-to-AC mapping to a STA and perform frame exchange with a STA based on information related to the second UP-to-AC mapping. Furthermore, at least one memory 204 of a second device 200 may store instructions for performing a method described in the example of FIG. 9 or examples described below when executed by at least one processor 202.

The examples of FIGS. 8 and 9 may correspond to some of the various examples of the present disclosure. Hereinafter, various examples of the present disclosure including the example of FIGS. 8 and 9 will be described in more detail.

Embodiments described below describe various examples related to new flexible UP-to-AC (FUTA) mapping that is distinct from the existing fixed UP-to-AC mapping. The flexible UP-to-AC (FUTA) mapping of the present disclosure may be applied by replacing the existing fixed UP-to-AC mapping, or the flexible UP-to-AC (FUTA) mapping of the present disclosure may be applied additionally (e.g., when a specific condition is satisfied) while applying the existing fixed UP-to-AC mapping as a default setting (e.g., when a specific condition is not satisfied).

In the following description, information related to UP-to-AC may include information indicating FUTA mapping (i.e., an AC mapped to an UP or an UP mapped to am AC), EDCA parameter information for an AC based on FUTA mapping and information on a timer to which FUTA mapping is applied (i.e., time to perform channel access and/or frame exchange by applying FUTA mapping).

### Embodiment 1

This embodiment relates to various methods for indicating UP-to-AC mapping according to FUTA.

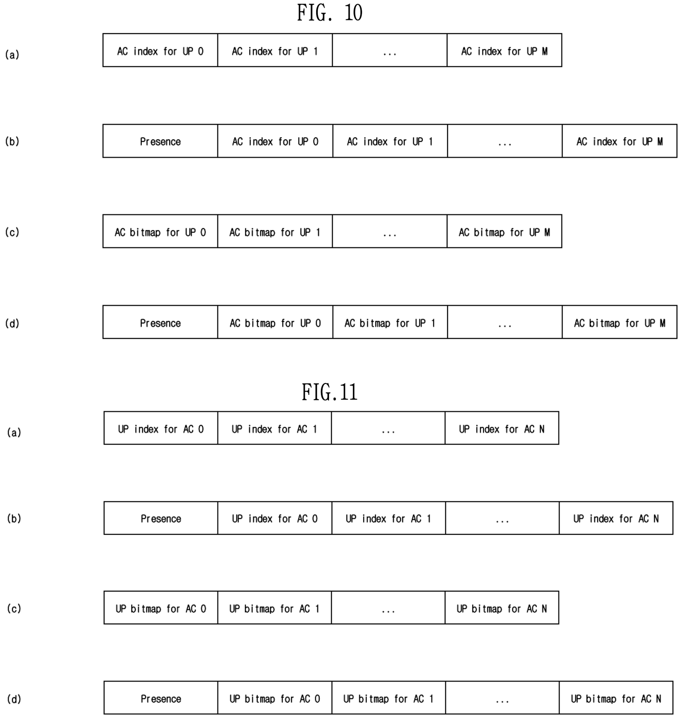

FIG. 10 and FIG. 11 are a diagram showing examples of information indicating mapping of UP-to-AC according to the present disclosure.

In the examples of FIGS. 10 and 11, the value of M may correspond to the number of UP indexes included in the set of UP indexes. The set of UP indexes may include all or a part of the UP indexes among the existing UP indexes (e.g., 0-7) and at least one new UP index. In other words, the value of M may be less than 8, may be 8 or may be greater than 8. In addition, the set of UP indexes may include at least zero existing UP index or may include at least zero new UP index. In addition, UP indexes included in the set of UP indexes may be continuous or non-continuous.

For example, when a new UP for a specific type of traffic (e.g., LL traffic) is defined in addition to the existing UPs 0-7, an UP index set may have an extended size from the existing 7. Alternatively, when an UP for a specific type of traffic is limited to a part of the existing UPs 0-7, an UP index set may have a reduced size than the existing 7. Alternatively, an UP index set may be configured by including some of the existing UPs and at least one UP. Alternatively, an UP index set is composed of 0-7 as before, and a method in which AC mapping is applied differently from the existing default UP-to-AC mapping for each UP may also be included in the FUTA mapping of the present disclosure.

In the examples of FIGS. 10 and 11, the value of N may correspond to the number of AC indexes included in the set of AC indexes. The set of AC indexes may include all or a part of the AC indexes among the AC indexes (e.g., 0-3) corresponding to existing AC (e.g., AC_BK, AC_BE, AC_VO, AC_VI) and at least one new AC index. In other words, the value of N may be less than 4, may be 4 or may be greater than 4. In addition, the set of AC indexes may include at least zero existing AC index or may include at least zero new AC index. In addition, AC indexes included in the set of AC indexes may be continuous or non-continuous.

For example, when a new AC for a specific type of traffic (e.g., LL traffic) is defined in addition to the existing AC_BK, AC_BE, AC_VO, AC_VI, an AC index set may have an extended size from the existing 4. Alternatively, when an AC for a specific type of traffic is limited to a part of the existing AC_BK, AC_BE, AC_VO, AC_VI, an AC index set may have a reduced size than the existing 4. Alternatively, an AC index set may be configured by including some of the existing ACs and at least one AC. Alternatively, an AC index set is composed of AC_BK, AC_BE, AC_VO, AC_VI as before, and a method in which UP mapping is applied differently from the existing default UP-to-AC mapping for each AC may also be included in the FUTA mapping of the present disclosure.

FIG. 10(a) shows fields indicating an AC index for each of UP 0, UP 1, ... UP M. An AC index may be indicated for all of the M UP indexes included in an UP index set, and an AC index may be indicated only for a part of the UP indexes.

In FIG. 10(b), a presence subfield may be added compared to the example of FIG. 10(a). For example, a presence subfield may include bitmap information. A bitmap may have a length of M, and a bit position may correspond to an UP index. A subfield indicating an AC index may exist for an UP index corresponding to a bit position indicated as the first value (e.g., 1) in a bitmap, and a subfield indicating an AC index may not exist for an UP index corresponding to a bit position indicated as the second value (e.g., 0) in a bitmap. In other words, since as many "AC index subfields for an UP index" as the number of bits indicated as being present in a presence bitmap exist, the overhead of information indicating FUTA mapping may be reduced.

FIG. 10(c) shows fields indicating an AC bitmap for each of UP 0, UP 1, ... UP M. Alternatively, an AC bitmap may not be indicated for all of the M UP indexes included in an UP index set, and an AC bitmap may be indicated only for a part of the UP indexes.

While only one AC index may be mapped to one UP index in the example of FIG. 10(a) and FIG. 10(b), at least one AC index may be mapped to one UP index in the example of FIG. 10(c). In order to more flexibly map an AC index to traffic corresponding to one UP index (e.g., LL traffic), it may be supported to map a plurality of AC indexes.

In FIG. 10(d), a presence subfield may be added compared to the example of FIG. 10(c). Similar to a description for FIG. 10(b), as many "AC bitmap subfields for an UP Index" as the number of bits indicated as being present in the bitmap of a presence subfield may be included.

FIG. 11(a) shows fields indicating an UP index for each of AC 0, AC 1, ... AC N. An UP index may be indicated for all of the N AC indexes included in an AC index set, and an UP index may be indicated only for a part of the AC indexes.

In FIG. 11(b), a presence subfield may be added compared to the example of FIG. 11(a). For example, a presence subfield may include bitmap information. A bitmap may have a length of N, and a bit position may correspond to an AC index. A subfield indicating an UP index may exist for an AC index corresponding to a bit position indicated as the first value (e.g., 1) in a bitmap, and a subfield indicating an UP index may not exist for an AC index corresponding to a bit position indicated as the second value (e.g., 0) in a bitmap. In other words, since as many "UP index subfields for an AC index" as the number of bits indicated as being present in a presence bitmap exist, the overhead of information indicating FUTA mapping may be reduced.

FIG. 11(c) shows fields indicating an AC bitmap for each of AC 0, AC 1, ... AC M. Alternatively, an UP bitmap may not be indicated for all of the N AC indexes included in an AC index set, and an UP bitmap may be indicated only for a part of the AC indexes.

While only one UP index may be mapped to one AC index in the example of FIG. 11(a) and FIG. 11(b), at least one UP index may be mapped to one AC index in the example of FIG. 11(c). In order to more flexibly map an UP index to traffic corresponding to one AC index (e.g., LL traffic), it may be supported to map a plurality of UP indexes.

In FIG. 11(d), a presence subfield may be added compared to the example of FIG. 11(c). Similar to a description for FIG. 11(b), as many "UP bitmap subfields for an AC Index" as the number of bits indicated as being present in the bitmap of a presence subfield may be included.

### Embodiment 2

This embodiment relates to the definition and application of a new EDCA parameter set according to the application of FUTA mapping.

A new EDCA parameter may be applied to an AC index set related to FUTA mapping (i.e., an existing AC index and/or a new AC index). For example, an existing EDCA parameter may be applied to an existing AC, and a new EDCA parameter may be applied to a new AC. A new EDCA parameter may be applied to each of at least one of the existing ACs. In other words, a new EDCA parameter may be applied to all or a part of the ACs included in an AC index set, respectively.

In this way, in addition to modifying/coordinating an AC mapped to a specific type of traffic (e.g., LL traffic) through FUTA mapping, a priority setting in more various aspects may be supported by modifying/coordinating an EDCA parameter for a corresponding AC.

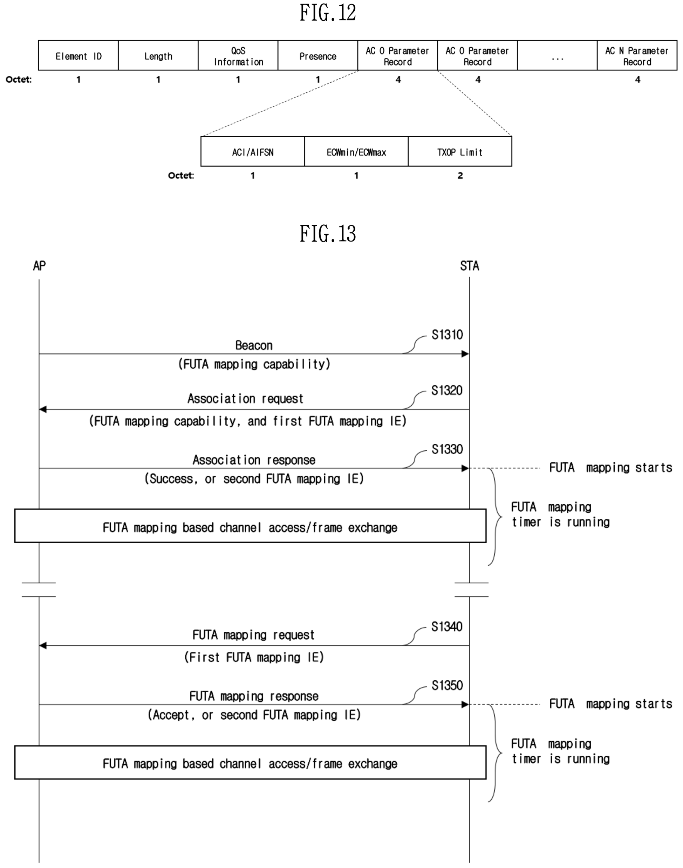

FIG. 12 shows an example of an EDCA parameter set information element format according to the present disclosure.

An EDCA parameter set information element (IE) may include an EDCA parameter set (i.e., a parameter record) for each of at least one AC.

An element ID may be set as a value identifying that a corresponding element relates to an EDCA parameter set. A length field may be set as a value indicating the total length of fields following a length field. A QoS information (info) field may include information about the EDCA parameter set update count, whether to have a Q-ACK capability, whether to have a queue request capability, whether to have a TXOP request capability, whether to have a more data ACK capability, etc.

A presence field may include bitmap information. A bitmap may have a length of N, and a bit position may correspond to an AC index. An EDCA parameter record subfield may exist for an AC index corresponding to a bit position indicated as the first value (e.g., 1) in a bitmap, and an EDCA parameter record subfield may not exist for an AC index corresponding to a bit position indicated as the second value (e.g., 0) in a bitmap. In other words, as many "AC index EDCA parameter record" subfields as the number of bits indicated as existing in a presence bitmap may exist.

An EDCA parameter record for each AC index may include an ACI (AC index)/AIFSN (arbitration interframe space number) subfield, an ECWmin/ECWmax subfield and a TXOP limit subfield. An ACI/AISFN subfield may include information such as AIFSN, admission control mandatory (ACM), ACI, etc. An ECWmin/ECWmax subfield may include a value (e.g., an exponent value) for calculating the minimum value and the maximum value of a contention window. A TXOP limit subfield may indicate a value that a TXOP duration must not exceed.

### Embodiment 3

This embodiment relates to conditions that FUTA mapping is applied and operations of an AP and a STA for FUTA application.

When FUTA mapping is continuously applied until a STA is dissociated after being associated with an AP, the application condition of FUTA mapping may not be necessary. When FUTA mapping is related to a specific type of traffic (e.g., LL traffic), since such traffic does not always exist, a time condition (e.g., a timer) that FUTA mapping is applied may be defined.

FUTA mapping timer information may be included in information related to UP-to-AC mapping according to the present disclosure (e.g., referred to as a FUTA mapping information element (IE)). For example, a FUTA mapping IE may include at least one of information indicating UP-to-AC mapping described by referring to FIGS. 10 to 11, EDCA parameter set information by AC index described by referring to FIG. 12 or FUTA mapping timer information. In other words, FUTA mapping timer information may be defined as one field included in a FUTA mapping IE.

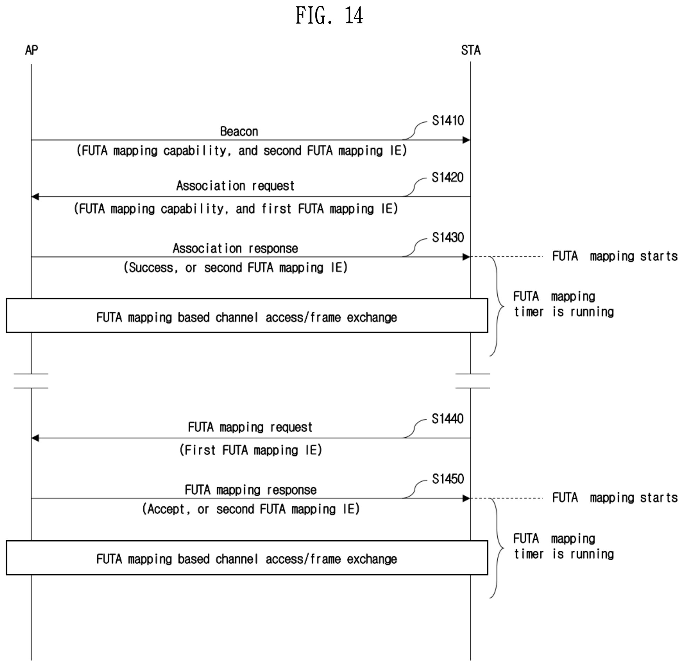

FIG. 13 and FIG. 14 are a diagram for describing examples of an operation of an AP and a STA for applying FUTA according to the present disclosure.

FIG. 13 shows an example of a case where an AP announces a FUTA capability.

In S1310, an AP may announce FUTA capability information notifying that FUTA mapping is possible or that FUTA mapping is supported through a beacon, a probe response, an action frame, etc.

In S1320, a STA having a FUTA capability may transmit an association request message including the first FUTA mapping IE to an AP.

In S1330, an AP may transmit to a STA an association response message including a status code representing whether to accept UP-to-AC mapping, an EDCA parameter set by AC index, a FUTA mapping timer, etc. included in the first FUTA mapping IE requested by a STA (i.e., requested by a STA). When an association request is successful, information requested by the first FUTA mapping IE may also be accepted. Alternatively, when an AP rejects information included in the first FUTA mapping IE, an AP may transmit to a STA FUTA mapping information (i.e., the second FUTA mapping IE) that it supports or prefers.

Additionally or alternatively, a response message may not include a status code indicating whether the first FUTA mapping IE is accepted, but may include the second FUTA mapping IE. In other words, a response message may include at least one of information on whether the first FUTA mapping IE is accepted or the second FUTA mapping IE.

Accordingly, while a FUTA mapping timer is running, channel access/frame exchange between an AP and a STA may be performed based on the first FUTA mapping IE (when a STA's request is accepted) or based on the second FUTA mapping IE (when a STA's request is rejected).

Additionally after the exchange of FUTA mapping-related information is performed during an association process or when the exchange of FUTA mapping-related information is not performed during an association process, a STA may transmit a FUTA mapping request message including the first FUTA mapping IE to an AP in S1340. The first FUTA mapping IE in S1340 may be the same as or different from the first FUTA mapping IE in S1320. In S1350, an AP may transmit to a STA a status code representing whether to accept the first FUTA mapping IE and/or a FUTA mapping response message including the second FUTA mapping IE requested by a STA. The second FUTA mapping IE in S1350 may be the same as or different from the second FUTA mapping IE in S1330. Accordingly, while a FUTA mapping timer is running, channel access/frame exchange between an AP and a STA may be performed based on the first FUTA mapping IE or the second FUTA mapping IE.

FIG. 14 shows an example of a case where an AP announces a FUTA capability and a FUTA mapping IE.

In S1410, an AP may announce FUTA capability information notifying that FUTA mapping is possible or that FUTA mapping is supported and FUTA mapping information (i.e., the second FUTA mapping IE) supported by an AP through a beacon, a probe response, an action frame, etc. Here, FUTA mapping information supported by an AP may include information about candidate(s) of FUTA mapping-related information.

In S1420, a STA having a FUTA capability may transmit an association request message including the first FUTA mapping IE to an AP. The first FUTA mapping IE may include FUTA mapping-related information that a STA supports/prefers among the second FUTA mapping IEs (i.e., candidate(s) of FUTA mapping-related information) announced by an AP.

Additionally or alternatively, a STA may also transmit to an AP a status code (e.g., 1-bit information) representing whether to request all of the second FUTA mapping IEs (i.e., candidate(s) of FUTA mapping-related information) announced by an AP by including it in an association request message. For example, when a STA applies all of the information included in the second FUTA mapping IE announced by an AP, a status code (e.g., 1-bit information) indicating "all requested" instead of the first FUTA mapping IE may be transmitted to an AP. Otherwise, a STA may inform an AP of requested FUTA mapping-related information through the first FUTA mapping IE while transmitting to an AP a status code meaning that it is partially requested.

In S1430, an AP may transmit to a STA an association response message including a status code representing whether to accept UP-to-AC mapping, an EDCA parameter set by AC index, a FUTA mapping timer, etc. included in the first FUTA mapping IE requested by a STA (i.e., requested by a STA). When an association request is successful, information requested by the first FUTA mapping IE may also be accepted. Alternatively, when an AP rejects information included in the first FUTA mapping IE, an AP may transmit to a STA FUTA mapping information that it supports or prefers (i.e., the second FUTA mapping IE that is the same as or different from FUTA mapping-related information announced by an AP in S1410).

Additionally or alternatively, a response message may not include a status code indicating whether the first FUTA mapping IE is accepted, but may include the second FUTA mapping IE. In other words, a response message may include at least one of information on whether the first FUTA mapping IE is accepted or the second FUTA mapping IE. Although a request message transmitted by a STA includes information indicating that all FUTA mapping-related information is requested, an AP may transmit a status code representing success to a STA through a response message in order to show that corresponding FUTA mapping-related information is finally applied.

Accordingly, while a FUTA mapping timer is running, channel access/frame exchange between an AP and a STA may be performed based on the first FUTA mapping IE or the second FUTA mapping IE.

Additionally after the exchange of FUTA mapping-related information is performed during an association process or when the exchange of FUTA mapping-related information is not performed during an association process, a STA may transmit to an AP a FUTA mapping request message including the first FUTA mapping IE and/or a status code representing whether to request all of the candidate(s) of FUTA mapping-related information announced by an AP in S1440. The first FUTA mapping IE in S1440 may be the same as or different from the first FUTA mapping IE in S1420. In S1450, an AP may transmit to a STA a status code representing whether to accept the first FUTA mapping IE and/or a FUTA mapping response message including the second FUTA mapping IE requested by a STA. The second FUTA mapping IE in S1450 may be the same as or different from the second FUTA mapping IE in S1430. Accordingly, while a FUTA mapping timer is running, channel access/frame exchange between an AP and a STA may be performed based on the first FUTA mapping IE or the second FUTA mapping IE.

As an additional example, after an AP announces a FUTA capability and/or the second FUTA mapping IE through a beacon, probe response, an action frame, etc., FUTA mapping-related information corresponding to the announced second FUTA mapping IE may be continuously applied without a request from a STA. Accordingly, when a STA having a FUTA mapping capability establishes an association with a corresponding AP, a STA may perform channel access/frame exchange, etc. by using a FUTA mapping IE announced by an AP (i.e., applying FUTA mapping-related information announced by an AP).

When the first AP is affiliated to the first AP multi-link device (MLD), if the second AP (e.g., the second AP in the first AP MLD or the second AP in the second AP MLD) enables/announces FUTA mapping-related information, the first AP may announce the same FUTA mapping-related information as FUTA mapping-related information of the second AP or may announce information representing that the FUTA mapping-related information of the second AP is also applied equally to the first AP.

### Embodiment 4

This embodiment relates to a method for transmitting traffic (e.g., LL traffic) from a STA after FUTA mapping is applied.

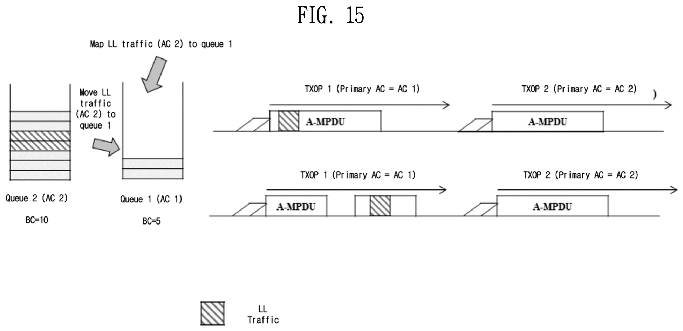

FIG. 15 is a diagram showing an example of FUTA mapping-based traffic transmission according to the present disclosure.

In the example of FIG. 15, it is assumed that the backoff-count (BC) of the EDCA function (EDCAF) of AC 1 is 5 and the BC of the EDCAF of AC 2 is 10. In general, MSDUs belonging to AC 1 are more likely to be transmitted first than MSDUs belonging to AC 2. In addition, it is assumed that the LL traffic of a specific STA is mapped to AC 2. According to this assumption, after a TXOP obtained based on AC 1 (i.e., a TXOP whose primary AC is set as AC 1) is terminated, LL traffic mapped to AC 2 may be transmitted in a TXOP obtained based on AC 2 (i.e., a TXOP whose primary AC is set as AC 2). In this case, a delay in LL traffic transmission occurs, so the requirement of LL traffic may not be satisfied.

When FUTA mapping according to the present disclosure is applied, a problem as above may be solved. For LL traffic whose initial AC is AC 2, UP-to-AC mapping may be modified to be mapped to AC 1 (or AC 1 in addition to AC 2) by applying FUTA mapping to LL traffic so that LL traffic mapped to queue 2 already corresponding AC 2 is moved to queue 1 corresponding to AC 1 or so that LL traffic newly received from a higher layer to a MAC entity is mapped to queue 1 corresponding to AC 1 instead of being mapped to queue 2 corresponding to AC 2. Accordingly, LL traffic may be mapped to queue 1 of AC 1 by mapping LL traffic to AC 1 that may be transmitted faster than AC 2.

Accordingly, LL traffic may be transmitted by being included in the first transmission A-MPDU of TXOP 1 where AC 1 is a primary AC or may be transmitted by being included in an A-MPDU following an A-MPDU being transmitted within TXOP 1.

After TXOP 1 is terminated, TXOP 2 where AC 2 is a primary AC may be started. When LL traffic is mapped to both AC 1 and AC 2 (i.e., LL traffic is mapped to both queue 1 and queue 2), after LL traffic is transmitted in TXOP 1 by being mapped to queue 1 corresponding to AC 1, LL traffic does not need to be transmitted from TXOP 2, so LL traffic may not be deleted from queue 2 corresponding to AC 2. Additionally or alternatively, when LL traffic is mapped to both AC 1 and AC 2 (i.e., LL traffic is mapped to both queue 1 and queue 2), if the transmission of LL traffic mapped to queue 1 of AC 1 is successful (e.g., if ACK for LL traffic is received), LL traffic does not need to be transmitted from TXOP 2, so LL traffic may not be deleted from queue 2 corresponding to AC 2. If ACK for LL traffic mapped to queue 1 of AC 1 and transmitted from TXOP 1 is not received (or if transmission is not successful), the same LL traffic mapped to queue 2 of AC 2 may be transmitted from TXOP 2.

When the mapping of LL traffic initially mapped to AC 2 is modified to AC 1 through FUTA mapping, LL traffic mapped to queue 2 of AC 2 may be moved to queue 1 of AC 1. Accordingly, LL traffic may be deleted from queue 2.

While the fixed UP-to-AC mapping is applied in the existing WLAN system, the examples of the present disclosure support flexible UP-to-AC mapping that appropriately modifies UP-to-AC mapping, efficiently coordinating a transmission priority according to traffic characteristics.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless local area network (WLAN) system, the method comprising:
transmitting, to an access point (AP), a request including information related to a first user priority-to-access category (UP-to-AC) mapping;
receiving, from the AP, a response including at least one of whether the information related to the first UP-to-AC mapping is accepted, or information related to a second UP-to-AC mapping; and
performing a frame exchange with the AP based on the information related to the first UP-to-AC mapping or the information related to the second UP-to-AC mapping.

2. The method of Claim 1, wherein:
at least one of the information related to the first UP-to-AC mapping, or the information related to the second UP-to-AC mapping includes one of an AC index for an UP, an UP index for an AC, or an UP bitmap for the AC.

3. The method of Claim 1, wherein:
the AC belongs to a set of ACs including at least one of a voice (VO), a video (VI), a best effort (BE), a background (BK), or at least one additional AC.

4. The method of Claim 1, wherein:
the UP belongs to a set of UPs including at least one of 0 to 7, or at least one additional UP.

5. The method of Claim 1, wherein:
at least one of the information related to the first UP-to-AC mapping, or the information related to the second UP-to-AC mapping includes a presence field, and
the at least one of the information related to the first UP-to-AC mapping, or the information related to the second UP-to-AC mapping includes at least one UP-to-AC mapping-related subfield indicated by the presence field.

6. The method of Claim 1, wherein:
at least one of the information related to the first UP-to-AC mapping, or the information related to the second UP-to-AC mapping includes an enhanced distributed channel access (EDCA) parameter.

7. The method of Claim 6, wherein the EDCA parameter includes at least one of:
an EDCA parameter for a VO,
an EDCA parameter for a VI,
an EDCA parameter for a BE,
an EDCA parameter for a BK, or
an EDCA parameter for each of at least one additional AC.

8. The method of Claim 1, wherein:
at least one of the information related to the first UP-to-AC mapping, or the information related to the second UP-to-AC mapping includes information about an UP-to-AC mapping timer.

9. The method of Claim 1, wherein:
before the request is transmitted by the STA, at least one of capability information related to an UP-to-AC mapping, or information related to the UP-to-AC mapping is announced by the AP.

10. The method of Claim 1, wherein:
based on an UP-to-AC mapping included in at least one of the information related to the first UP-to-AC mapping, or the information related to the second UP-to-AC mapping not being applied, a fixed UP-to-AC mapping is applied as a default.

11. The method of Claim 1, wherein:
in the frame exchange, a low latency (LL) traffic is mapped to at least one of a first queue corresponding to a first AC or a second queue corresponding to a second AC.

12. The method of Claim 11, wherein:
based on the LL traffic being mapped to the first queue and the second queue, and a completion of a transmission of the LL traffic included in the first queue, the LL traffic is deleted from the second queue.

13. The method of Claim 11, wherein:
based on the LL traffic being mapped to the first queue and the second queue, and an acknowledgement (ACK) for a transmission of the LL traffic included in the first queue, the LL traffic is deleted from the second queue.

14. The method of Claim 11, wherein:
based on the LL traffic mapped to the second queue being mapped to the first queue, the LL traffic is deleted from the second queue.

15. The method of Claim 11, wherein:
a first transmission opportunity (TXOP) corresponding to the first AC or the first queue precedes a second TXOP corresponding to the second AC or the second queue in a time domain.

16. The method of Claim 1, wherein:
the information related to the second UP-to-AC mapping includes information related to an UP-to-AC mapping allowed by the AP.

17. A station (STA) device in a wireless local area network (WLAN) system, the device comprising:
at least one transceiver; and
at least one processor connected to the at least one transceiver,
wherein the at least one processor is configured to:
transmit, through the at least one transceiver, to an access point (AP), a request including information related to a first user priority-to-access category (UP-to-AC) mapping;
receive, through the at least one transceiver, from the AP, a response including at least one of whether the information related to the first UP-to-AC mapping is accepted, or information related to a second UP-to-AC mapping; and
perform, through the at least one transceiver, a frame exchange with the AP based on the information related to the first UP-to-AC mapping or the information related to the second UP-to-AC mapping.

18. A method performed by an access point (AP) in a wireless local area network (WLAN) system, the method comprising:
receiving, from a station (STA), a request including information related to a first user priority-to-access category (UP-to-AC) mapping;
transmitting, to the STA, a response including at least one of whether the information related to the first UP-to-AC mapping is accepted, or information related to a second UP-to-AC mapping; and
performing a frame exchange with the STA based on the information related to the first UP-to-AC mapping or the information related to the second UP-to-AC mapping.

19. A first access point (AP) device in a wireless local area network (WLAN) system, the device comprising:
at least one transceiver; and
at least one processor connected to the at least one transceiver,
wherein the at least one processor is configured to:
receive, through the at least one transceiver, from a station (STA), a request including information related to a first user priority-to-access category (UP-to-AC) mapping;
transmit, through the at least one transceiver, to the STA, a response including at least one of whether the information related to the first UP-to-AC mapping is accepted, or information related to a second UP-to-AC mapping; and
perform, through the at least one transceiver, a frame exchange with the STA based on the information related to the first UP-to-AC mapping or the information related to the second UP-to-AC mapping

20. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to Claim 1.

21. At least one non-transitory computer-readable medium storing at least one instruction, wherein:
the at least one instruction controls a device to perform a method according to Claim 1 in a wireless local area network (WLAN) system by being executed by at least one processor.
